Europäisches Patentamt

European Patent Office

Office européen des brevets

(19)

(11) Veröffentlichungsnummer: **0 249 896**
**B1**

(12) **EUROPÄISCHE PATENTSCHRIFT**

(45) Veröffentlichungstag der Patentschrift:
14.03.90

(21) Anmeldenummer: 87108466.1

(22) Anmeldetag: 11.06.87

(51) Int. Cl.⁴: **B44C 1/165,** B44C 1/17,
B32B 27/36

(54) Prägefolie, insbesondere Heissprägefolie.

(30) Priorität: 14.06.86 DE 8616114 U

(43) Veröffentlichungstag der Anmeldung:
23.12.87 Patentblatt 87/52

(45) Bekanntmachung des Hinweises auf die Patenterteilung:
14.03.90 Patentblatt 90/11

(84) Benannte Vertragsstaaten:
DE FR GB

(56) Entgegenhaltungen:
DE-A- 2 649 479
DE-A- 3 248 670
DE-B- 2 800 635

(73) Patentinhaber: LEONHARD KURZ GMBH & CO.,
Schwabacher Strasse 482, D-8510 Fürth/Bayern(DE)

(72) Der Erfinder hat auf seine Nennung verzichtet

(74) Vertreter: LOUIS, PÖHLAU, LOHRENTZ & SEGETH,
Kesslerplatz 1 Postfach 3055, D-8500 Nürnberg-1(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Prägefolie, insbesondere eine Heißprägefolie, mit einer Trägerfolie und einer Dekorschicht, wobei die Dekorschicht mindestens eine Lackschicht und gegebenenfalls eine Kleberschicht, eine zwischen der Trägerfolie und der Lackschicht vorgesehene Trennschicht und eine zwischen der Lackschicht und der Kleberschicht vorgesehene Metall- oder Farbschicht aufweist.

Bei derartigen Prägefolien besteht häufig das Bestreben, sie in bestimmter Weise dekorativ auszubilden. Die dekorative Ausbildung der Prägefolie kann dabei beispielsweise dadurch erfolgen, daß die Trägerfolie auf der der Dekorschicht zugewandten Seite oberflächlich aufgekratzt wird. Bei einer solchen Prägefolie ergibt sich jedoch eine Orientierung des räumlichen Musters in Längsrichtung der Prägefolie.

Bei einer Prägefolie, wie sie beispielsweise aus der DE-OS 26 49 479 bekannt ist, ist es zwar möglich, ein räumliches Muster vorzusehen, das von einer Orientierung der Prägefolie unabhängig ist, dort befindet sich das räumliche Muster jedoch nicht auf der der Dekorschicht zugewandten Seite der Trägerfolie, d.h. bei abgezogener Trägerfolie auf der Oberseite der Dekorschicht, sondern zwischen der Lackschicht und der Kleberschicht im Inneren der Dekorschicht. Deshalb läßt der mit einer Prägefolie der zuletzt genannten Art erzielte optische Effekt noch Wünsche offen.

Der vorliegenden Erfindung liegt deshalb die Aufgabe zugrunde, eine Prägefolie der eingangs genannten Art zu schaffen, bei der nicht nur eine von einer bestimmten Orientierung der Prägefolie unabhängige räumliche Musterung möglich ist, sondern bei der außerdem die räumliche Musterung auf der der Trägerfolie zugewandten Oberseite der Dekorschicht vorhanden ist und nicht im Inneren der Dekorschicht.

Diese Aufgabe wird erfindungsgemäß dadurch gelöst, daß die Trägerfolie eine an sich bekannte thermoplastische Polyester-Dreischichtfolie mit einer äußeren, einer zentralen und einer inneren Polyesterschicht ist, wobei die zentrale Polyesterschicht einen niedrigeren Schnittpunkt aufweist als die äußere und die innere Polyesterschicht, und daß an der der Dekorschicht zugewandten inneren Oberfläche der Trägerfolie eine räumliche Musterung vorgesehen ist. Eine derartiger Trägerfolie ist in der DE-OS 32 48 670 beschrieben. Die Trägerfolie besteht aus zwei außenliegenden Polyesterschichten, in die eine niedriger schmelzende zentrale Polyesterschicht eingebettet ist, die bei höheren Temperaturen prägbar ist und die bei einer anwendungstechnisch notwendigen Thermobehandlung die vorgegebene Prägetiefe weitgehend beibehält. Die äußere und die innere Polyesterschicht bestehen vorzugsweise aus Polyethylenterephthalat. Die zentrale Polyesterschicht besteht vorzugsweise aus einem Copolyester, der zwischen 5 und 95 Gew.-% Ethylenisophthalateinheiten enthält. Bei der Trägerfolie handelt es sich insbesondere um eine coextrudierte Dreischichtfolie.

Die zentrale Polyesterschicht der Trägerfolie weist bei der erfindungsgemäßen Prägefolie vorzugsweise eine Dicke zwischen 4 μm und 10 μm auf. Mit diesem Dickenbereich werden auf einem Prägekalander oder auf einer ähnlichen Maschine mit einer eine gravierte Oberfläche aufweisenden Walze, die beheizt sein kann, auf der Trägerfolie konturenscharfe Strukturbilder, d.h. konturenscharfe räumliche Muster erzielt. Zur dauerhaften Prägung der Trägerfolie hat es sich als vorteilhaft erwiesen, die Oberfläche der Prägewalze auf ca. 160°C bis 200°C zu erwärmen. Mit einem derartigen Prägekalander oder einer ähnlichen Maschine ist es möglich, auf der der Dekorschicht zugewandten inneren Oberfläche der Trägerfolie vor dem Aufbringen der Dekorschicht jedes gewünschte Gravurmuster dauerhaft einzuprägen. Bei diesem Gravurmuster kann es sich beispielsweise um geometrische Linien, um Holzmaserung, um eine Steinstruktur, od. dgl. handeln.

Als besonders vorteilhaft hat es sich erwiesen, daß die zentrale, verformbare Polyesterschicht der Trägerfolie eine Dicke von 7,5 μm aufweist. Nach dem Prägen der Trägerfolie wird in an sich bekannter Weise auf der Seite der Trägerfolie eine Dekorschicht aufgebracht, die dann mit dem Negativ der räumlichen Musterung der Trägerfolie versehen ist. Nach dem Prägevorgang, d.h. nach dem Übertragen der Dekorschicht auf eine Unterlage und nach dem Ablösen der Trägerfolie von der auf der Unterlage befestigten Dekorschicht befindet sich das räumliche Muster an der freien Oberfläche der Dekorschicht, so daß sich ein guter optischer Eindruck der geprägten Folie ergibt.

Die innere, der Dekorschicht zugewandte Polyesterschicht der Trägerfolie ist bei der erfindungsgemäßen Prägefolie vorzugsweise dünner als die äußere, von der Dekorschicht abgewandte Polyesterschicht. Eine derartige Trägerfolie weist außerdem den Vorteil auf, daß ihre Klebeneigung am Prägekalander während der Herstellung der räumlichen Musterung minimal ist, so daß die Prägung der Trägerfolie mit relativ großen Vorschubgeschwindigkeiten durchgeführt werden kann.

Die Trägerfolie der erfindungsgemäßen Prägefolie weist vorzugsweise eine Dicke zwischen 24 μm und 30 μm auf. Als besonders zweckmäßig hat sich eine Trägerfolie mit einer Dicke von 27,5 μm erwiesen.

Die räumliche Musterung kann die Negativabbildung einer Gravur sein. Mit einer Gravur sind sehr feine räumliche Musterungen herstellbar, so daß beispielsweise eine Holzmaserung naturgetreu nachgebildet werden kann.

Weitere Einzelheiten, Merkmale und Vorteile ergeben sich aus der nachfolgenden Beschreibung zweier in der Zeichnung schematisch dargestellter Ausführungsbeispiele der erfindungsgemäßen Prägefolie. Es zeigen:

Fig. I einen Längsschnitt durch eine abschnittweise vergrößert dargestellte Prägefolie, wobei die Dicken der einzelnen Folien bzw. Schichten zueinander nicht im richtigen Verhältnis dargestellt sind, und

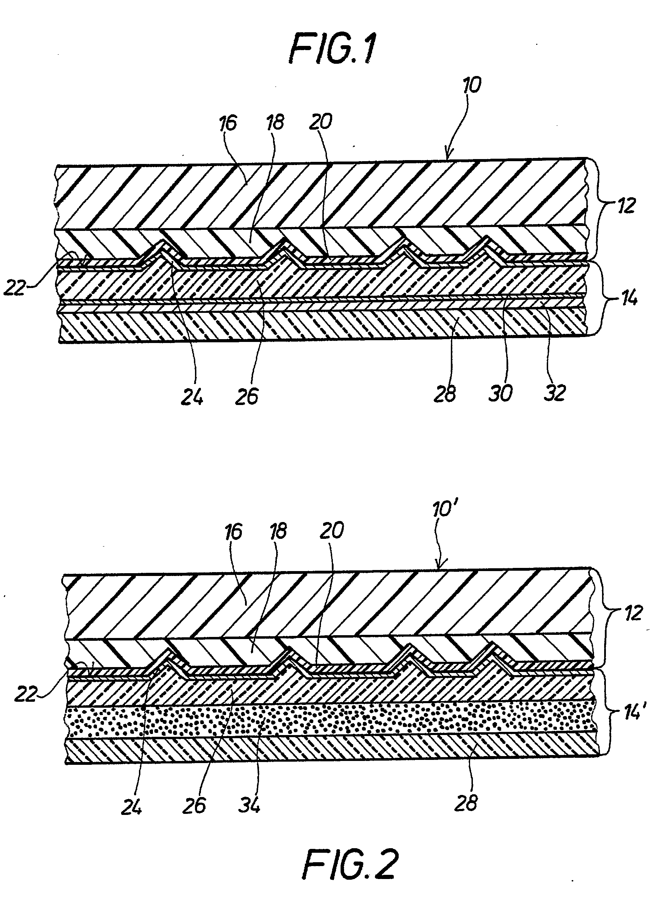

Fig. 2 einen Längsschnitt durch eine abschnittweise vergrößert dargestellte Prägefolie, die an Stelle einer Metallschicht und einer Haftvermittlerschicht eine Farbschicht aufweist.

Figur I zeigt eine Prägefolie IO, insbesondere eine Heißprägefolie, die eine Trägerfolie I2 und eine Dekorschicht I4 aufweist. Die Trägerfolie ist als Polyester-Dreischichtfolie ausgebildet, die eine äußere Polyesterschicht I6, eine zentrale Polyesterschicht I8 und eine innere Polyesterschicht 20 aufweist. Die Dicke der Trägerfolie I2 liegt im Bereich zwischen 24 µm und 30 µm. Die der Dekorschicht I4 zugewandte innere Polyesterschicht 20 ist dünner als die äußere Polyesterschicht I6. Die zentrale Polyesterschicht I8 weist eine Dicke zwischen 4 µm und IO µm auf. An der der Dekorschicht I4 zugewandten inneren Oberfläche 22 der Trägerfolie I2 ist eine räumliche Musterung vorgesehen. Die räumliche Musterung weist eine Tiefe auf, die größer ist als die Dicke der inneren Polyesterschicht 20. Die Dicke der inneren Polyesterschicht 20 liegt größenordnungsmäßig bei I µm. Mit der Bezugsziffer 24 ist eine Trennschicht bezeichnet, die eine Dicke von größenordnungsgemäß 0,I µm aufweist. Mit Hilfe dieser Trennschicht 24 kann im unmittelbaren Anschluß an den Prägevorgang die Trägerfolie I2 von der auf einer Unterlage fixierten Dekorschicht I4 problemlos abgelöst werden. Die Dekorschicht I4 weist eine an die Trennschicht 24 angrenzende Lackschicht 26 sowie eine Kleberschicht 28 auf, wobei zwischen der Lackschicht 26 und der Kleberschicht 28 eine Metallschicht 30 und eine Haftvermittlerschicht 32 vorgesehen sind. Die Lackschicht 26 besteht aus einem transparenten Lack und weist eine Dicke von größenordnungsmäßig 2 µm auf. Die an die Lackschicht 26 angrenzende Metallschicht 30 ist eine sogenannte Dünnschicht, die beispielsweise durch Kathodenzerstäubung, durch Vakuumbedampfen oder dgl. auf die Lackschicht 26 festhaftend aufgebracht wird. Die Metallschicht 30 weist eine Dicke von größenordnungsgemäß 5.IO$^{-2}$ µm auf. Die Haftvermittlerschicht 32 dient dazu, zwischen der Metallschicht 30 und der Kleberschicht 28 eine mechanisch feste Verbindung herzustellen. Ihre Dicke beträgt größenordnungsgemäß 0,I µm. Die Kleberschicht 28 weist eine Dicke von größenordnungsgemäß 2 bis 3 µm auf.

Figur 2 zeigt eine Prägefolie IO' mit einer Trägerfolie I2 und einer Dekorschicht I4, wobei die Trägerfolie I2 gleich aufgebaut ist wie die in Figur I dargestellte Trägerfolie. Damit erübrigt es sich, die äußere Polyesterschicht I6, die zentrale Polyesterschicht I8 und die der Dekorschicht I4 zugewandte innere Polyesterschicht 20 noch einmal detailliert zu beschreiben. Mit der Bezugsziffer 22 ist auch in dieser Figur die innere Oberfläche der Trägerfolie I2 bezeichnet, die mit einer räumlichen Musterung versehen ist. Die mit der räumlichen Musterung versehene innere Oberfläche 22 ist mit einer Trennschicht 24 versehen, deren Wanddicke größenordnungsgemäß 0,I µm beträgt. Die Dekorschicht I4' weist eine an die Trennschicht 24 angrenzende Lackschicht 26, eine an die Lackschicht 26 angrenzende Farbschicht 34 und eine Kleberschicht 28 auf, die an die Farbschicht 34 angrenzt. Die Farbschicht 34 weist eine Dicke von größenordnungsgemäßig 3 µm auf. Die Farbschicht 34 kann einfarbig ausgebildet sein, so daß sich eine sogenannte Unicolor-Prägefolie ergibt, während es sich bei der in Figur I schematisch dargestellten Prägefolie um eine sogenannte metallisierte Folie handelt.

**Patentansprüche**

I. Prägefolie, insbesondere Heißprägefolie, mit einer Trägerfolie und einer Dekorschicht, wobei die Dekorschicht mindestens eine Lackschicht und gegebenenfalls eine Kleberschicht, eine zwischen der Trägerfolie und der Lackschicht vorgesehene Trennschicht und eine zwischen der Lackschicht und der Kleberschicht vorgesehene Metall- oder Farbschicht aufweist, **dadurch gekennzeichnet,** daß die Trägerfolie (I2) eine an sich bekannte thermoplastische Polyester-Dreischichtfolie mit einer äußeren, einer zentralen und einer inneren Polyesterschicht (I6, I8, 20) ist, wobei die zentrale Polyesterschicht (I8) einen niedrigeren Schmelzpunkt aufweist als die äußere und die innere Polyesterschicht (I6, 20), und daß an der der Dekorschicht (I4, I4') zugewandten inneren Oberfläche (22) der Trägerfolie (I2) eine räumliche Musterung vorgesehen ist.

2. Prägefolie nach Anspruch I, dadurch gekennzeichnet, daß die zentrale Polyesterschicht (I8) eine Dicke zwischen 4 µm und IO µm aufweist.

3. Prägefolie nach Anspruch 2, dadurch gekennzeichnet, daß die zentrale Polyesterschicht (I8) eine Dicke von 7,5 µm aufweist.

4. Prägefolie nach Anspruch I, dadurch gekennzeichnet, daß die innere, der Dekorschicht (I4, I4') zugewandte Polyesterschicht (20) der Trägerfolie (I2) dünner ist als die äußere, von der Dekorschicht (I4, I4') abgewandte Polyesterschicht (I6).

5. Prägefolie nach einem der vorhergehenden Ansprüche, dadurch gekennzeichnet, daß die Trägerfolie (I2) eine Dicke zwischen 24 µm und 30 µm aufweist.

6. Prägefolie nach Anspruch 5, dadurch gekennzeichnet, daß die Trägerfolie (I2) eine Dicke von 27,5 µm aufweist.

7. Prägefolie nach Anspruch I, dadurch gekennzeichnet, daß die räumliche Musterung die Negativabbildung einer Gravur ist.

**Claims**

1. An embossing foil, in particular a hot embossing foil, comprising a backing foil and a decorative layer, wherein the decorative layer comprises at least a layer of lacquer and optionally a layer of adhesive, a separating layer between the backing foil and the layer of lacquer, and a metal or colour layer between the layer of lacquer and the adhesive layer, characterised in that the backing foil (I2) is a per se known thermoplastic polyester triple-layer foil comprising outer, central and inner polyester layers (I6, I8, 20), wherein the central polyester layer (I8) has a lower melting point than the outer and inner polyester layers (16, 20) and a three-dimensional patterning is provided at the inside surface (22) of the backing foil (12), which is towards the decorative layer (14, 14').

2. An embossing foil according to claim 1 characterised in that the central polyester layer (18) is between 4 µm and 10 µm in thickness.

3. An embossing foil according to claim 2 characterised in that the central polyester layer (18) is 7.5 µm in thickness.

4. An embossing foil according to claim 1 characterised in that the inner polyester layer (20) of the backing foil (12), which is towards the decorative layer (14, 14'), is thinner than the outer polyester layer (16) which faces away from the decorative layer (14, 14').

5. An embossing foil according to one of the preceding claims characterised in that the backing foil (12) is between 24 µm and 30 µm in thickness.

6. An embossing foil according to claim 5 characterised in that the backing foil (12) is 27.5 µm in thickness.

7. An embossing foil according to claim 1 characterised in that the three-dimensional patterning is the negative representation of an engraving.

**Revendications**

1. Feuille grainée, en particulier feuille grainée par estampage à chaud, comprenant une feuille support et une couche décorative, cette couche décorative présentant au moins une couche de vernis et éventuellement une couche de colle, une couche de séparation prévue entre la feuille support et la couche de vernis et une couche métallique ou de couleur prévue entre la couche de vernis et la couche de colle, caractérisée en ce que la feuille support (12) est une feuille trois couches thermoplastique en polyester connue comportant une couche extérieure, une couche centrale et une couche intérieure de polyester (16, 18, 20), la couche centrale de polyester (18) ayant un plus bas point de fusion que la couche extérieure et la couche intérieure de polyester (16, 20), et en ce que sur la face intérieure (22), dirigée vers la couche décorative (14, 14'), de la feuille support (12) est prévu un dessin en relief.

2. Feuille grainée selon la revendication 1, caractérisée en ce que la couche centrale de polyester (18) a une épaisseur comprise entre 4 et 10 µm.

3. Feuille grainée selon la revendication 2, caractérisée en ce que la couche centrale de polyester (18) a une épaisseur de 7,5 µm.

4. Feuille grainée selon la revendication 1, caractérisée en ce que la couche intérieure de polyester (20), dirigée vers la couche décorative (14, 14'), de la feuille support (12) est plus mince que la couche extérieure de polyester (16), opposée à la couche décorative (14, 14').

5. Feuille grainée selon l'une des revendications précédentes, caractérisée en ce que la feuille support (12) a une épaisseur comprise entre 24 et 30 µm.

6. Feuille grainée selon la revendication 5, caractérisée en ce que la feuille support (12) a une épaisseur de 27,5 µm.

7. Feuille grainée selon la revendication 1, caractérisée en ce que le dessin en relief est l'image négative d'une gravure.

# FIG.1

# FIG.2